# EUROPÄISCHE PATENTSCHRIFT

(11) **EP 1 434 946 B1**
(45) Veröffentlichungstag und Bekanntmachung des Hinweises auf die Patenterteilung: **31.01.2007**
(21) Anmeldenummer: 02785042.9
(22) Anmeldetag: 08.10.2002
(51) Int. Cl.: F16C 11/06, B60G 7/00

(54) **KUGELGELENK**
BALL-AND-SOCKET JOINT
JOINT A ROTULE

(30) Priorität: 09.10.2001 DE 10149609
(43) Veröffentlichungstag der Anmeldung: 07.07.2004
(73) Patentinhaber: ZF Lemförder Metallwaren AG, 49441 Lemförde (DE)
(72) Erfinder: SCHÖNHOFF, Stefan, 49191 Belm (DE); FISCHER, Markus, 49439 Steinfeld (DE)
(86) Internationale Anmeldenummer: PCT/DE2002/003777
(87) Internationale Veröffentlichungsnummer: WO 2003/033921

(56) Entgegenhaltungen:
- EP-A- 0 593 373
- DE-A- 2 441 914
- DE-A- 2 441 915
- DE-A- 4 108 488
- DE-A- 4 224 895
- US-A- 4 466 755

## Beschreibung

Die Erfindung betrifft ein Kugelgelenk vorzugsweise für Fahrwerksaufhängungen und/oder Lenkungen von Kraftfahrzeugen mit den im gattungsbildenden Teil der unabhängigen Ansprüche 1 und 2 genannten Merkmalen.

Ein derartiges Kugelgelenk ist beispielsweise aus der DE 42 44 886 C 2 bekannt. In dieser Schrift wird die Winkelbeweglichkeit zwischen Gelenkkopf und Gelenkgehäuse des dort offenbarten Kugelgelenkes durch eine Anschlagvorrichtung begrenzt, welche einen gehäuseseitig rotationssymmetrischen und kegelstumpfförmigen Anschlag umfasst, dem ein durch eine entsprechende Ausnehmung gebildeter Gegenanschlag im Gelenkkopf mit Abstand zugeordnet ist.

Ein so ausgebildetes Anschlagelement hat sich zwar prinzipiell bewährt, besitzt jedoch den Nachteil, dass bei Berührung des Gelenkzapfens an dem gehäuseseitig vorhandenen, kegelstumpfförmigen Anschlag infolge einer sich ausbildenden Hebelwirkung die Lagerschale im oberen, dem Zapfenbereich zugewandten Bereich partiell sehr stark belastet wird, was zu vorzeitigem Verschleiß und einer Herabsetzung der Gesamtlebensdauer des Kugelgelenkes führen kann.

Dies ist insbesondere dann von Nachteil, wenn die Kugelgelenke mit der Möglichkeit der bekannten Winkelausschlagbegrenzung durch die Federkraft belastet sind sowie das Gewicht von Radträger und Bremsscheibe im voll ausgefederten Zustand des Fahrzeuges tragen müssen.

Die US 4,466,755 offenbart des Weiteren ein Kugelgelenk mit einem Gelenkzapfen, welcher mit einem Gelenkbereich an seinem einen freien Ende dreh- und kippbar in einem beidseitig offenen Gelenkgehäuse aufgenommen und mit seinem anderen freien Ende befindlichen Zapfenbereich statisch an einem Karosserieteil festgelegt ist. Ferner ist eine Anschlagvorrichtung für die Begrenzung der Kippbewegung des Gelenkzapfens im Gehäuse, offenbart, wobei ein Anschlagelement im Bereich der dem Gelenkzapfen abgewandten Öffnung im Gehäuse angeordnet ist und diese Öffnung verschließt in der Ausbildung eines Verschlussdeckels. Das Anschlagelement weist eine in Richtung des Gelenkzapfens weisende Wölbung auf, die einen steten Kontaktpunkt mit dem Gelenkzapfen aufweist und diesen unter einer Vorspannung im Gehäuse hält. Nachteilig an dieser Ausführung ist insbesondere, dass das Anschlagelement stets in Kontakt mit dem Gelenkzapfen steht. Dies bedingt bei Dreh- und oder Kippbewegungen eine stetige Reibung, die zum einen einen erhöhten Verschleiß bedingt und zum anderen ein zusätzliches Reibmoment erzeugt, das der Dreh- und Kippbewegung entgegensteht. Zudem wird das Anschlagelement bei einer Kippbewegung verformt, so dass sich eine mit der Kippbewegung stetig erhöhende Gegenkraft bzw. Federkraft einstellt, welche den Kugelzapfen in seine Ausgangslage zurückstellt und keinen definierten Anschlagpunkt für den Gelenkzapfen im Gehäuse definiert.

Aufgabe der vorliegenden Erfindung ist es daher, ein Kugelgelenk der gattungsgemäßen Art derart weiterzubilden, dass auch unter extremen Belastungsbedingungen kein vorzeitiger Verschleiß funktionswichtiger Bauelemente wie beispielsweise der Lagerschale des Kugelgelenkes eintritt, d.h. ein Kugelgelenk bereitzustellen, bei dem die Anschlagvorrichtung für die Auslenkung des Gelenkzapfens eine gleichmäßigere Flächenpressung zwischen Gelenkzapfen und Lagerschale ermöglicht. Gleichzeitig soll die Fertigung eines derartigen Kugelgelenkes einfacher und somit kostengünstiger realisiert werden.

Diese Aufgabe wird in Zusammenschau mit den gattungsbildenden Merkmalen durch die in den kennzeichnenden Teilen der nebengeordneten Ansprüche 1 und 2 offenbarten technischen Lehren gelöst.

Ein Grundgedanke der Erfindung besteht darin, das Anschlagelement als eine konvex gekrümmte, vorzugsweise kugelförmig über den als einteiligen Bestandteil des Gelenkgehäuses ausgebildeten Gelenkgehäuseboden vorstehende Wölbung auszubilden.

Alternativ hierzu lässt sich die Aufgabe dadurch lösen, dass das Anschlagelement am Gehäuseboden eine konkave Krümmung, vorzugsweise jedoch eine Hohlkugelform aufweist, wobei der Radius der Hohlkugelform größer ausgebildet ist als der Radius der Kugelform des Gelenkbereiches des Gelenkzapfens.

Durch die vorgeschlagenen technischen Lösungen wird erreicht, dass der kugelförmige Bereich des Gelenkzapfens bei einer Berührung zwischen diesem und dem erfindungsgemäß ausgebildeten Anschlagelement angehoben wird und durch die Anhebung eine gleichmäßige Anpressung des Kugelzapfens am oberen, dem Zapfenbereich zugewandten Ende der Lagerschale erfolgt. Ein weiterer Vorteil der erfindungsgemäßen Lösungen besteht darin, dass der Gelenkzapfen an seinem gelenkkugelseitigen Ende, an dem aus fertigungstechnischen Gründen eine Abflachung vorhanden ist, keine zusätzliche Bearbeitung als Gegenelement zu dem Anschlag der Anschlagvorrichtung benötigt. Es können somit für Kugelgelenke mit und ohne Anschlagvorrichtung die gleichen Gelenkzapfen Verwendung finden, was sowohl aus fertigungstechnischen als auch als Lagerhaltungsgründen maßgebliche Vorteile bietet.

Im Folgenden werden die beiden alternativen erfindungsgemäßen Lösungen anhand der beigefügten Zeichnungen näher erläutert. Es zeigt:
- Figur 1: eine Schnittdarstellung durch ein Kugelgelenk mit einer Anschlagvorrichtung gemäß der ersten offenbarten Lösung,
- Figur 2: eine Schnittdarstellung des Kugelgelenkes aus Figur 1 im ausgelenkten Zustand,
- Figur 3: eine Schnittdarstellung durch ein Kugelgelenk mit einer erfindungsgemäßen Anschlagvorrichtung gemäß Variante 2 und
- Figur 4: eine Schnittdarstellung durch das erfindungsgemäße Kugelgelenk der Figur 3 mit ausgelenktem Gelenkzapfen.

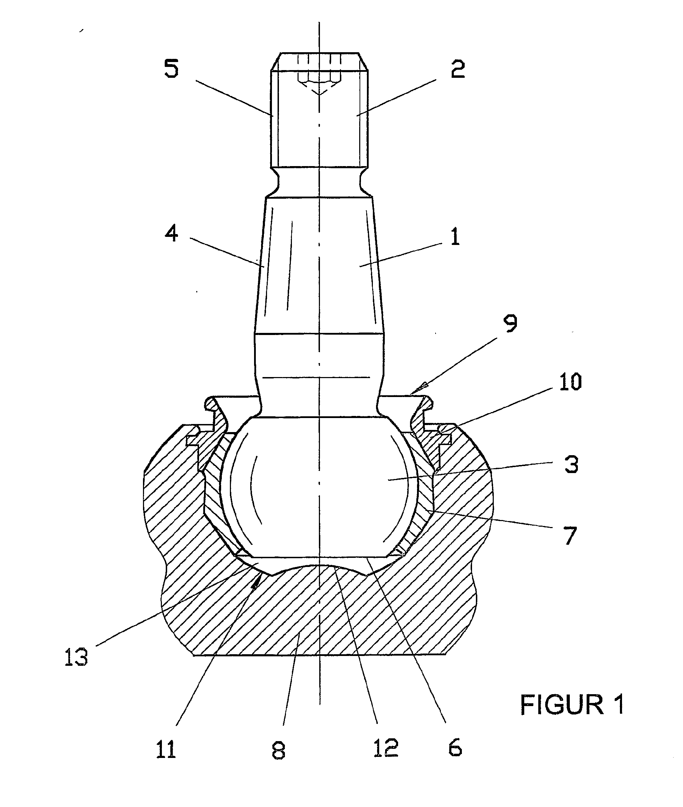

Das in Figur 1 abgebildete Kugelgelenk besteht im Wesentlichen aus einem Gelenkzapfen 1, welcher einen Zapfenbereich 2 sowie einen Gelenkbereich 3 aufweist. Der Zapfenbereich 2 ist mit einer konischen Aufnahme 4 versehen, mit deren Hilfe der Gelenkzapfen statisch mit einem Karosserieteil verbunden und durch den Gewindeteil 5 am freien Ende des Zapfenbereiches 2 am Karosserieteil festgelegt werden kann. Der Gelenkbereich 3 ist im Wesentlichen kugelförmig ausgebildet und besitzt an seinem freien, dem Zapfenbereich 2 abgewandten Ende eine durch fertigungstechnische Gründe bedingte Abplattung 6. Der Gelenkbereich 3 ist in einer Lagerschale 7 aufgenommen, welche wiederum in einer Ausnehmung eines Gelenkgehäuses 8 festgelegt ist. Die Ausnehmung für die Lagerschale 7 ist sacklochartig mit einer Öffnung 9 ausgebildet, durch die die Lagerschale 7 zusammen mit dem Gelenkbereich 3 des Gelenkzapfens 1 in das Gelenkgehäuse 8 einführbar ist. Sind die genannten Bauteile im Gelenkgehäuse 8 aufgenommen, so wird das Gelenkgehäuse 8 durch einen Verschlussring 10 verschlossen, wodurch die Lagerschale 7 in Axiallängsrichtung des Kugelgelenkes festgelegt wird.

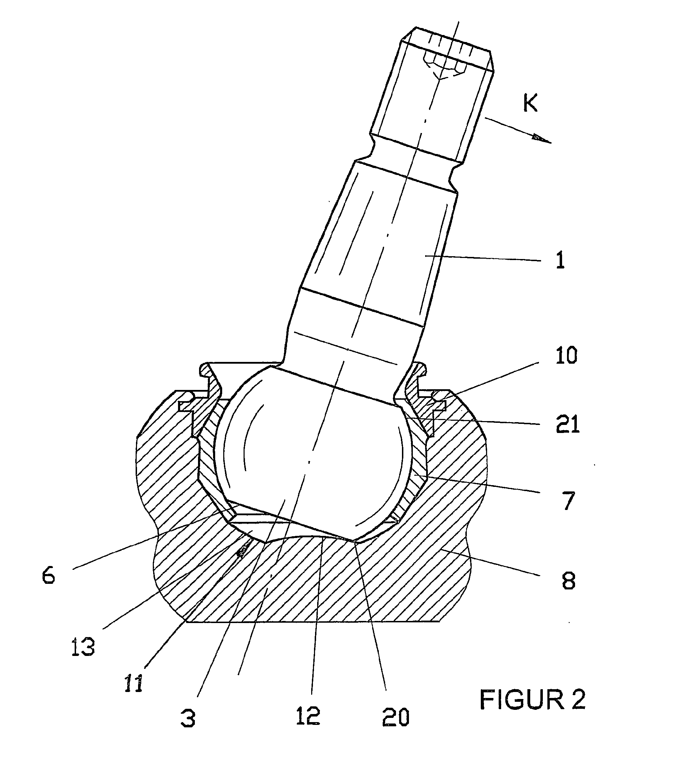

Aus der Figur 1 ist deutlich zu ersehen, dass die sacklochartige Aufnahmebohrung im Gelenkgehäuse 8 einen Bodenbereich 11 aufweist, welcher eine kugelförmig in Richtung der Abplattung 6 des Gelenkzapfens 1 vorstehende, rotationssymmetrische Wölbung 12 in Form einer Kugelfläche aufweist. Zwischen der Abplattung 6 und der Oberfläche der Wölbung 12 ist bei normaler Auslenkung des Gelenkzapfens 1 ein Luftspalt 13 vorhanden. Wird der Gelenkzapfen 1 innerhalb der Lagerschale 7 stark gekippt, wie dies der Darstellung der Figur 2 zu entnehmen ist, verringert sich der Luftspalt 13 einseitig bis die Abplattung 6 des Gelenkzapfens 1 auf der Wölbung 12 des Bodenbereiches 11 in der Sacklochbohrung des Gelenkgehäuses 8 im Berührungspunkt 20 zur Anlage kommt. Eine weitere Bewegung des Gelenkzapfens 1 in Richtung des Pfeiles K führt zu einer Verlagerung des Punktes 20 entlang der Wölbung 12 und automatisch zu einer Anhebung des Gelenkzapfens 1. Die durch die Wölbung 12 veranlasste Anhebung führt gleichzeitig zu einer Wanderung des Anlagebereiches 21 zwischen dem Gelenkbereich 3 und der Lagerschale 7 im oberen Bereich des Verschlussringes 10. Somit wird eine punktuelle Belastung auf der oberen, im Bereich des Verschlussringes 10 liegenden Seite der Lagerschale in verschiedenen Kippstellungen des Gelenkzapfens 1 vermieden, so dass eine besondere Verschleißsituation in diesem Bereich trotz hoher Belastung und großer Kippauslenkung des Gelenkzapfens 1 ausgeschlossen werden kann. Die Lebensdauer des erfindungsgemäßen in den Figuren 1 und 2 dargestellten Kugelgelenkes wird damit vergrößert. Gleichzeitig ist den Figuren 1 und 2 zu entnehmen, dass die Anschlagvorrichtung prinzipiell aus der Wölbung 12 im Bodenbereich 11 des Gelenkgehäuses besteht, wohingegen der Gelenkzapfen 1 in herkömmlicher Weise am Ende des Gelenkbereiches 3 die Abplattung 6 aufweist und somit eine besondere Anpassung, wie dies bei den aus dem Stand der Technik bekannten Anschlagvorrichtungen notwendig ist, entfallen kann.

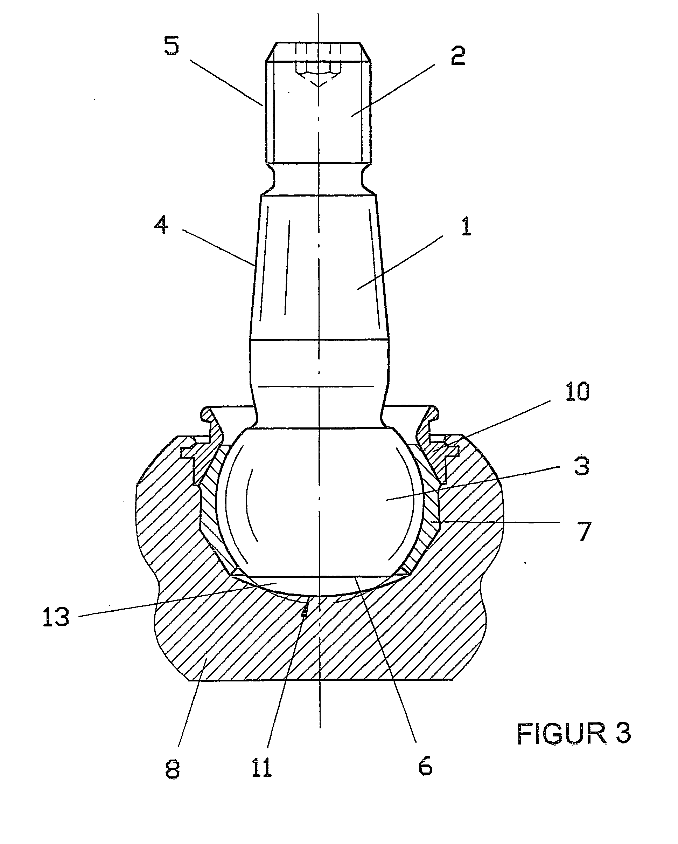

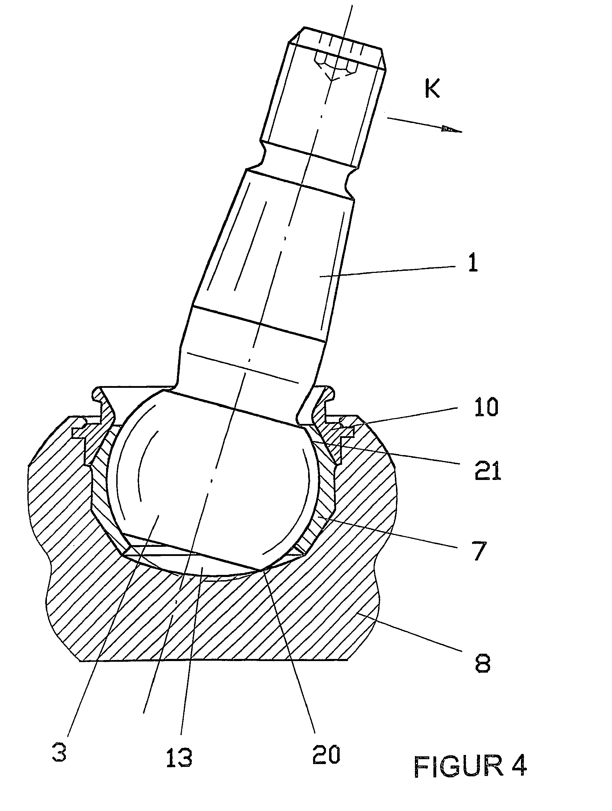

Das in den Figuren 3 und 4 dargestellte Kugelgelenk, bei dem das Anschlagelement entsprechend der zweiten Lösungsvariante ausgebildet ist, besteht im Wesentlichen aus den gleichen Bauteilen wie das in den Figuren 1 und 2 dargestellte Kugelgelenk. In einem Gelenkgehäuse 8 ist auch hier unter Zwischenschaltung einer Lagerschale 7 der Gelenkbereich 3 eines Gelenkzapfens 1 dreh- und kippbar aufgenommen. Lagerschale 7 und Gelenkbereich 3 befinden sich hierbei in einer sacklochartigen Ausnehmung des Gelenkgehäuses 8, die durch einen Verschlussring 10 nach Einsetzen der oben genannten beiden Bauteile verschossen wird. Der Gelenkzapfen 1 besitzt analog der Darstellung der Figuren 1 oder 2 einen Zapfenbereich 2, mit dem der Gelenkzapfen 1 an einem Karosserieteil, welches hier aus Übersichtlichkeitsgründen nicht näher dargestellt ist, festgelegt werden kann. Die Anschlagvorrichtung, durch welche die Kippbewegung des Gelenkzapfens 1 begrenzt wird, besteht in der Ausgestaltungsvariante der Figuren 3 und 4 aus einer besonderen Ausbildung des Bodenbereiches 11 des Gelenkgehäuses 8.

Entsprechend der zweiten Variante des Erfindungsgedankens ist der Bodenbereich 11 in Form einer Hohlkugel ausgebildet, wobei der Radius der Hohlkugel einen größeren Durchmesser aufweist als der Kugelradius des Gelenkbereiches 3 des Gelenkzapfens 1. Dies ist in den Figuren 3 und 4 dadurch verdeutlicht, dass der kugelförmige Gelenkbereich 3 über die auch bei diesem Gelenkzapfen 1 vorhandene Abplattung 6 hinaus strichpunktiert dargestellt worden ist, wodurch deutlich wird, dass der Radius des kugelförmig ausgebildeten Bodenbereiches 11 einen deutlich größeren Wert aufweist.

Die Wirkungsweise dieser speziellen Gestaltung des Bodenbereiches 11 wird anhand der Figur 4 deutlich, in der das Kugelgelenk mit gekipptem Gelenkzapfen 1 dargestellt ist. Der üblicherweise zwischen der Abplattung 6 des Gelenkzapfens 1 und der Oberfläche des Bodenbereiches 11 vorhandene Luftspalt 13 verringert sich analog der Darstellung der Figur 2, bis der Gelenkzapfen 1 im Bereich des Berührpunktes 20 mit dem Bodenbereich 11 des Gelenkgehäuses 8 zur Anlage kommt. Eine weitere Auslenkung in Richtung des Pfeiles K führt zu einer Verlagerung des Berührpunktes 20 entlang der Wölbung des Bodenbereiches 11, so dass gleichzeitig eine Wanderung des Anlagebereiches 21 im oberen Bereich der Lagerschale benachbart dem Verschlussring 10 eintritt. Somit ist beiden Ausgestaltungsvarianten gemeinsam, dass die Auslenkung des Gelenkzapfens 1 in Richtung des Pfeiles K nach dessen Anlage im Berührpunkt 20 auf Grund der speziellen Ausgestaltung des Bodenbereiches zu einer wenn auch geringfügigen Anhebung des Gelenkzapfens 1 beiträgt, wodurch eine Reduzierung der Flächenpressung im empfindlichen oberen Bereich der Lagerschale 7 im Gegensatz zu aus dem Stand der Technik bekannten Lösungen herbeigeführt wird.

### Bezugszeichenliste

- 1.: Gelenkzapfen
- 2.: Zapfenbereich
- 3.: Gelenkbereich
- 4.: konische Aufnahme
- 5.: Gewindebereich
- 6.: Abplattung
- 7.: Lagerschale
- 8.: Gelenkgehäuse
- 9.: Öffnung
- 10.: Verschlussring
- 11.: Bodenbereich
- 12.: Wölbung
- 13.: Luftspalt
- 20.: Berührungspunkt
- 21.: Anlagebereich

## Patentansprüche

1. Kugelgelenk, vorzugsweise für Fahrwerkaufhängungen und/oder Lenkungen von Kraftfahrzeugen mit einem Gelenkzapfen (1), welcher mit einem Gelenkbereich (3) an seinem einen freien Ende dreh- und kippbar in einem Gelenkgehäuse (8) aufgenommen und mit einem an seinem anderen freien Ende befindlichen Zapfenbereich (2) statisch an einem Karosserieteil festgelegt ist und einer Anschlagvorrichtung für die Begrenzung der Kippbewegung des Gelenkzapfens (1) im Gehäuse, aufweisend ein im Bodenbereich (11) des Gelenkgehäuses rotationssymmetrisch zur Kugelgelenklängsachse angeordnetes Anschlagelement, welches mit dem endseitigen Gelenkbereich (6) des Gelenkzapfens (1) zusammenwirkt,
**dadurch gekennzeichnet, dass**
das Anschlagelement als eine kugelförmig über den als einteiligen Bestandteil des Gelenkgehäuses (8) ausgebildeten Bodenbereich (11) des Gelenkgehäuses vorstehende Wölbung (12) ausgebildet ist.

2. Kugelgelenk, vorzugsweise für Fahrwerkaufhängungen und/oder Lenkungen von Kraftfahrzeugen mit einem Gelenkzapfen (1), welcher mit einem Gelenkbereich (3) an seinem einen freien Ende dreh- und kippbar in einem Gelenkgehäuse (8) aufgenommen und mit einem an seinem anderen freien Ende befindlichen Zapfenbereich (2) statisch an einem Karosserieteil festgelegt ist und einer Anschlagvorrichtung für die Begrenzung der Kippbewegung des Gelenkzapfens (1) im Gehäuse, aufweisend ein im Bodenbereich (11) des Gelenkgehäuses rotationssymmetrisch zur Kugelgelenklängsachse angeordnetes Anschlagelement, welches mit dem endseitigen Gelenkbereich (6) des Gelenkzapfens (1) zusammenwirkt,
**dadurch gekennzeichnet dass**,
das Anschlagelement im Bodenbereich (11) des Gelenkgehäuses eine Hohlkugelform aufweist, wobei der Radius der Hohlkugelform größer ausgebildet ist als der Radius der Kugelform des Gelenkbereiches (3) des Gelenkzapfens (1).

## Claims

1. Ball joint, preferably for chassis suspensions and/or steering systems of motor vehicles having a pivot pin (1), which is received by an articulated region (3) on its one free end in a rotatable and tiltable manner in a joint housing (8) and is fastened by a pin region (2) situated on its other free end statically to a body part, and having a stop device for limiting the tilting movement of the pivot pin (1) in the housing, comprising a stop element, which is disposed in the base region (11) of the joint housing rotationally symmetrically relative to the ball joint longitudinal axis and interacts with the end-side articulated region (6) of the pivot pin (1),
**characterized in that**
the stop element takes the form of a curvature (12), which protrudes spherically from the base region (11) of the joint housing, which base region (11) is designed as an integral component of the joint housing (8).

2. Ball joint, preferably for chassis suspensions and/or steering systems of motor vehicles having a pivot pin (1), which is received by an articulated region (3) on its one free end in a rotatable and tiltable manner in a joint housing (8) and is fastened by a pin region (2) situated on its other free end statically to a body part, and having a stop device for limiting the tilting movement of the pivot pin (1) in the housing, comprising a stop element, which is disposed in the base region (11) of the joint housing rotationally symmetrically relative to the ball joint longitudinal axis and interacts with the end-side articulated region (6) of the pivot pin (1),
**characterized in that**
the stop element in the base region (11) of the joint housing is of a hollow spherical shape, wherein the radius of the hollow spherical shape is designed larger than the radius of the spherical shape of the articulated region (3) of the pivot pin (1).

## Revendications

1. Articulation à rotule, de préférence pour des systèmes de suspension de châssis et/ou des mécanismes de direction de véhicules automobiles, comprenant un pivot d'articulation (1) dont une partie de rotule (3) située à sa première extrémité libre est reçue de façon pivotante et oscillante dans un boîtier d'articulation (8), et dont une partie de pivot (2) située à l'autre extrémité libre est fixée de façon statique dans un élément de carrosserie, et comprenant un dispositif de butée destiné à limiter le mouvement d'inclinaison du pivot d'articulation (1) dans le boîtier, qui présente un élément de butée disposé de façon symétrique en rotation, par rapport à l'axe longitudinal de l'articulation à rotule, dans la partie de fond (11) du boîtier d'articulation, coopérant avec la face terminale de la partie de rotule (6) du pivot d'articulation (1),
**caractérisée en ce que** l'élément de butée est réalisé sous forme d'un bombement sphérique (12) saillant au-dessus de la partie de fond (11) du boîtier d'articulation, qui constitue une partie intégrante monobloc du boîtier d'articulation (8).

2. Articulation à rotule, de préférence pour des systèmes de suspension de châssis et/ou des mécanismes de direction de véhicules automobiles, comprenant un pivot d'articulation (1) dont une partie de rotule (3) située à sa première extrémité libre est reçue de façon pivotante et oscillante dans un boîtier d'articulation (8), et dont une partie de pivot (2) située à l'autre extrémité libre est fixée de façon statique dans un élément de carrosserie, et comprenant un dispositif de butée destiné à limiter le mouvement d'inclinaison du pivot d'articulation (1) dans le boîtier, qui présente un élément de butée disposé de façon symétrique en rotation, par rapport à l'axe longitudinal de l'articulation à rotule, dans la partie de fond (11) du boîtier d'articulation, coopérant avec la face terminale de la partie de rotule (6) du pivot d'articulation (1),
**caractérisée en ce que** l'élément de butée aménagé dans la partie de fond (11) du boîtier d'articulation présente une forme d'empreinte sphérique concave, le rayon de la forme sphérique concave étant plus grand que le rayon de la forme sphérique de la partie de rotule (3) du pivot d'articulation (1).
